# EUROPÄISCHE PATENTSCHRIFT

(11) **EP 0 349 746 B1**
(45) Veröffentlichungstag und Bekanntmachung des Hinweises auf die Patenterteilung: **17.03.1993**
(21) Anmeldenummer: 89109189.4
(22) Anmeldetag: 22.05.1989
(51) Int. Cl.: B62D 35/00

(54) **Windleiteinrichtung für Lastkraftwagen und Sattelzüge**
Air-guiding device for lorries and towing vehicles
Dispositif de guidage de l'air pour camion et semi-remorque

(30) Priorität: 08.07.1988 DE 3823161
(43) Veröffentlichungstag der Anmeldung: 10.01.1990
(73) Patentinhaber: MAN Nutzfahrzeuge Aktiengesellschaft, 80976 München (DE)
(72) Erfinder: Schubert, Klaus, Dr., D-8031 Wessling (DE); Rieck, Gerhard, Dipl.-Ing., D-8000 München 60 (DE); Kraus, Wolfgang, Professor, D-8000 München 50 (DE)

(56) Entgegenhaltungen:
- DE-A- 2 743 203
- DE-A- 3 213 820
- GB-A- 1 532 283
- US-A- 4 458 937
- US-A- 4 509 786
- "Scania: a complete range of Tractors" EGB 1288.03.85 und "Mercedes-Benz 1635s, 2035s & 1644s 38-Tonne "Powerliner" Tractor-Units, Oktober 1986

## Beschreibung

Die Erfindung bezieht sich auf eine Windleiteinrichtung für Lastkraftwagen und Sattelzüge mit Fahrerhäusern unterschiedlicher Außenabmessungen sowie Aufbauten und Aufliegern unterschiedlicher Höhe, wobei die Windleiteinrichtung aus einem vorwiegend am rückwärtigen Teil des Fahrerhausdaches angeordneten, höhenverstellbaren Windflügel, seitlich an der Fahrerhausrückwand befestigten Windleitblechen und zwischen Windleitflügel und Fahrerhaus sowie zwischen Windleitflügel und Windleitblechen angeordneten, diese verbindenden Zwischenelementen besteht.

Solche Windleiteinrichtungen, die zur Reduzierung des Cw-Wertes und damit zur Senkung des Kraftstoffverbrauches dienen, sind in einer Vielfalt von Ausführungsformen bekannt, wobei Fahrerhäusern unterschiedlicher Abmessungen auch unterschiedlich figurierte Windleitbleche zugeordnet sind, die ein uneinheitliches Erscheinungsbild mit unterschiedlichen Strömungsverhältnissen innerhalb einer Lkw-Palette gleichen Fabrikates vermitteln.

Aus dem Prospekt der Firma Daimler-Benz ("Mercedes - Benz 1635s, 2035s & 1644s 38 Tonne "Powerliner" Tractor Units" October 1986) sind Fahrerhäuser unterschiedlicher Länge mit einer gattungsgemäßen Windleiteinrichtung aus einem einzigen Bausatz bekannt. Diese Windleiteinrichtung ist aber nur für den Einsatz bei Fahrerhäusern gleicher Breite geeignet.

Bekannt ist auch eine Windleiteinrichtung für Kraftfahrzeuge, die aus einem höhenverstellbaren Windflügel für das Fahrerhaus, sowie zwei seitlichen, den Zwischenraum zwischen dem Fahrerhaus und dem Auflieger überbrückenden rolloartigen Planen besteht. Dieser Bausatz kann zwar bei unterschiedlich breiten Fahrerhäusern verwendet werden, jedoch ergibt sich durch die rolloartige Ausführung der Planen und durch fehlende Zwischenelemente kein ästhetisch geschlossenes Bild der Einrichtung, worauf es aber bei modernen Fahrzeugen ankommt.

Es sind auch klappbare Windleitbleche zum Ausgleich der seitlichen Fugen zwischen Fahrerhaus und Auflieger bekannt. Diese dienen jedoch nur zum Abklappen an die Fahrerhauswand, so daß seitlich ein freier Zugang zu verschiedenen

Aggregaten entsteht, nicht aber zur stufenlosen Anpassung an unterschiedlichen Fugen zwischen Fahrerhaus und Auflieger im Seitenbereich.

Der Erfindung liegt die Aufgabe zugrunde, den Luftwiderstandbeiwert bei Lastkraftwagen, insbesondere Sattelzügen, mit Fahrerhäusern unterschiedlicher Breitenabmessungen, mit wirtschaftlich optimierten Maßnahmen bei gleichzeitiger gestalterischer Aufwertung des gesamten Fahrzeuges, zu senken.

Dies wird durch die kennzeichnenden Merkmale des Anspruches 1 erreicht.

Solcherart kommt bei allen Fahrerhausvarianten eines Fabrikates, gleich, ob es sich um eine langschmale, eine langbreite oder eine kurzschmale Ausführung handelt, ein Bausatz gleicher Elemente zur Anwendung, wobei die Abmessungsunterschiede bei den Fahrerhäusern durch klar definierte, aber unterschiedliche Fugen zwischen den einzelnen Elementen des Bausatzes überbrückt werden und der optische Eindruck formal kaschiert wird. Neben den Vorteilen einheitlicher Strömungsverhältnisse und eines damit einhergehenden einheitlichen Kraftstoffverbrauches sowie eines einheitlichen Erscheinungsbildes ergibt sich eine größere Wirtschaftlichkeit infolge der Reduzierung von Werkzeugen, geringerer Lagerhaltung, einheitlicher Fertigung und Montage.

Ein besonderes Kennzeichen der Windleitflügelform ist die große seitliche Abrundung im Profilschnitt, die in Verbindung mit den Zwischenelementen eine gestalterische Anpassung an verschiedene Fahrerhausvarianten ermöglicht. Weitere vorteilhafte Ausgestaltungen der Erfindung sind den Unteransprüchen zu entnehmen.

Die Erfindung ist in mehreren Ausführungsbeispielen dargestellt.

Es zeigen:
Fig. 1 ein Fahrerhaus in der Seitenansicht,
Fig. 2 ein Fahrerhaus in der Vorderansicht (langbreite Ausführung),
Fig. 3 ein Fahrerhaus in der Vorderansicht (langschmale Ausführung),
Fig. 4 Schnitt AA in der Vorderansicht nach Fig. 1,
Fig. 5 Schnitt BB in der Draufsicht nach Fig. 2,
Fig. 6 Lkw in der vorderen Perspektive,
Fig. 7 Lkw in der hinteren Perspektive.

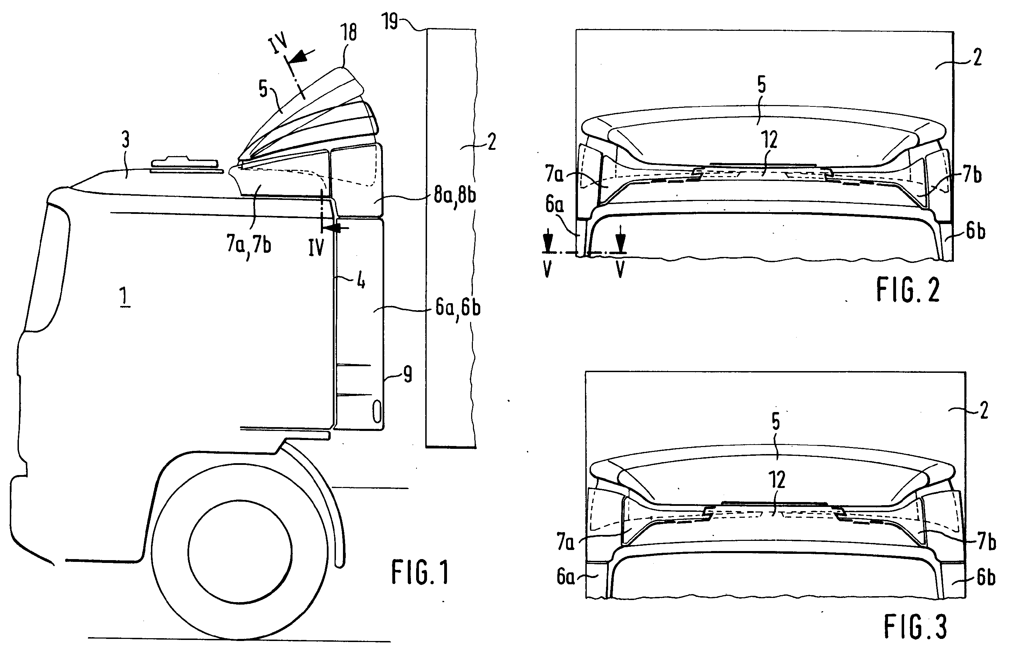

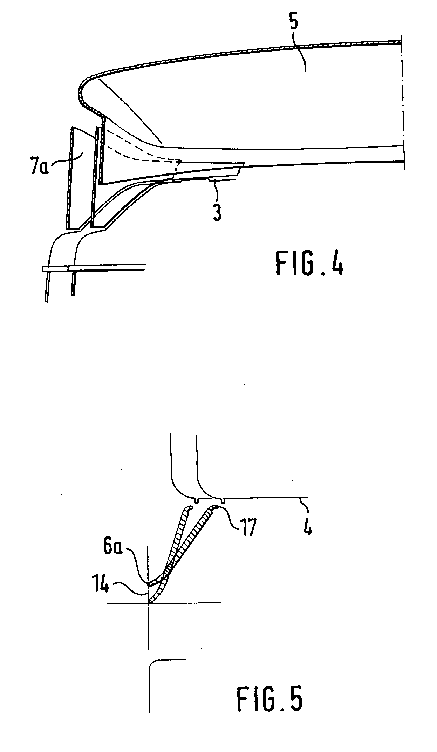

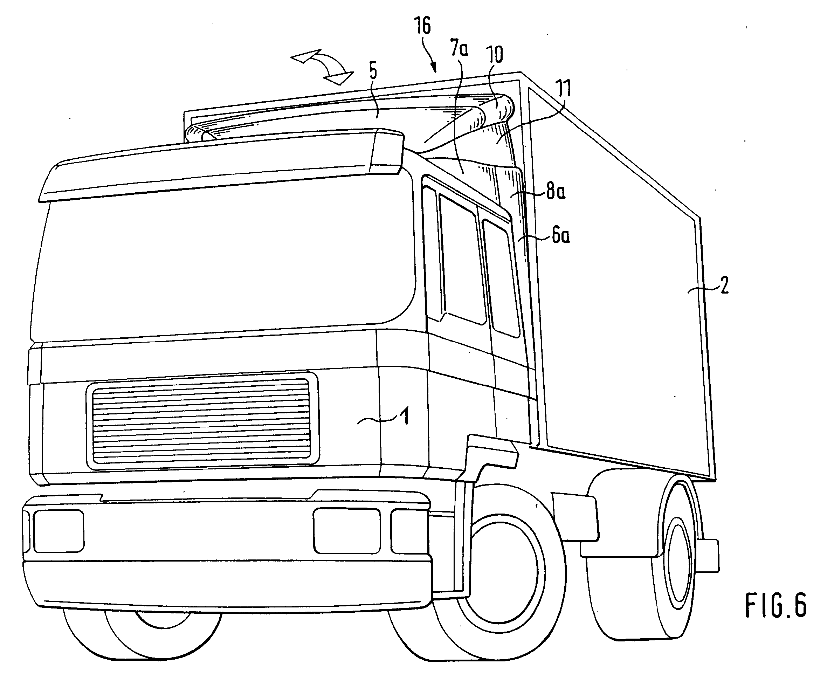

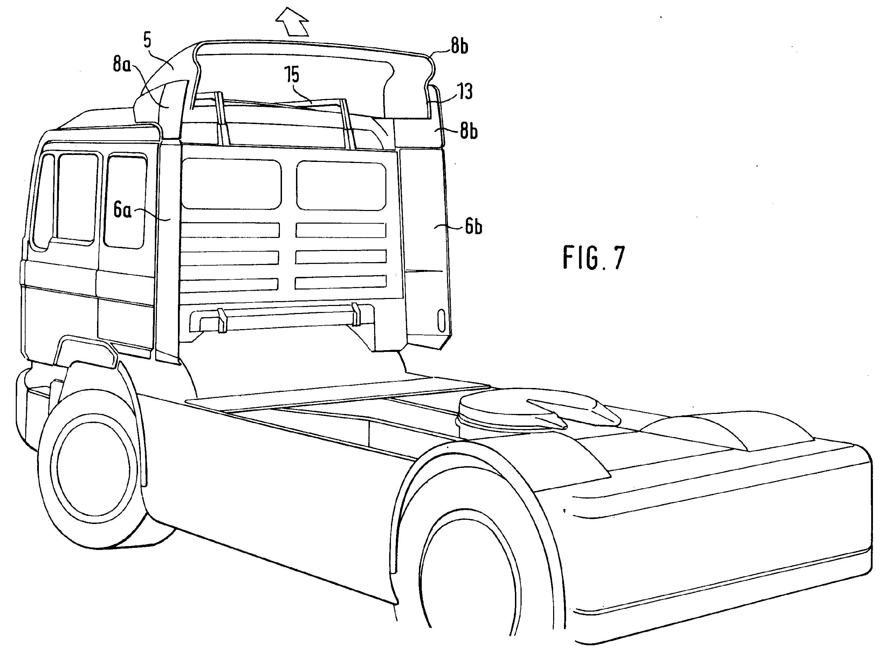

Die Figuren 1, 2, 3 zeigen einen Lkw mit einem Fahrerhaus 1 und einem sich daran anschließenden Auflieger 2. Auf dem Fahrerhausdach 3, vorzugsweise im rückwärtigen Bereich, ist ein über eine Verstelleinrichtung 15 (Fig. 7) höhenverstellbarer Windleitflügel 5 angebracht, dessen freies Ende 18 auf die unterschiedlichen Oberkanten 19 des Aufliegers 2 entsprechend ihrer Höhe ausrichtbar ist. Der Übergang von Fahrerhaus 3 zu Auflieger 2 erfolgt an den Seiten durch Windleitbleche 6a und 6b, die an der Fahrerhausrückwand 4 bei allen Fahrerhausvarianten im gleichen Abstand von der Fahrerhausseitenbegrenzung, einstellbar an den Drehpunkten 17 (Fig. 5), in ihrer Ausladung zur äußeren Seitenbegrenzung des Aufliegers 2 bei unterschiedlicher Fugenbildung 14, angeordnet sind. Der Übergang zwischen Windleitflügel 5 und den Windleitblechen 6a, 6b wird durch Zwischenelemente 8a, 8b gebildet, die in die eingekragten Seitenwände 13 (Fig. 7) des Windleitflügels 5, diese untergreifend, hineinragen. Über die Zwischenelemente 7a, 7b wird die Verbindung zwischen Fahrerhausdach 3 und Windleitflügel 5 hergestellt, wobei über unterschiedliche Fugenbildung 12 bei allen Fahrerhausvarianten unter Verwendung gleicher Zwischenelemente ein einheitliches Strömungsprofil und Erscheinungsbild erzielt wird. Die Fuge 12 liegt hinter der Dachluke, ist von vorne nicht sichtbar und stört deshalb auch nicht das Erscheinungsbild. Nach Fig. 6 sind am Windleitblech 5 an den Ecken Rundwülste 10 ausgebildet, die zusammen mit den Zwischenelementen 7a, 7b die kegelförmigen Rinnen 11 ergeben. Daraus resultiert in Zusammenwirken mit dem dachwärts sich verjüngenden Windleitflügel 5 das Strömungsprofil 16. Mittels eines einheitlichen Bausatzes von Elementen können also Fahrerhäuser unterschiedlicher Außenabmessung in Verbindung mit Aufliegern unterschiedlicher Höhe mit einer einzigen Windleiteinrichtung ausgestattet werden, über die optimale Cw-Werte und damit einhergehend ein niedriger Kraftstoffverbrauch erzielt werden kann, wobei durch unterschiedliche Fugenbildung zwischen den einzelnen Elementen ein einheitliches Erscheinungsbild vermittelt wird.

### Bezugszeichenliste

- 1: Fahrerhaus
- 2: Auflieger, Aufbau
- 3: Fahrerhausdach
- 4: Fahrerhausrückwand
- 5: Windleitflügel
- 6a, 6b: Windleitbleche
- 7a, 7b: Zwischenelemente
- 8a, 8b: Zwischenelemente
- 9: freie Enden von 6a, 6b
- 10: Rundwülste
- 11: kegelförmige Rinnen
- 12: Fugen
- 13: eingekragte Seitenwände von 5
- 14: Fugen
- 15: Verstelleinrichtung
- 16: Strömungsprofil
- 17: Drehpunkt an 4
- 18: freies Ende von 5
- 19: vordere Oberkante von 2

## Patentansprüche

1. Windleiteinrichtung für Lastkraftwagen und Sattelzüge mit Fahrerhäusern unterschiedlicher Außenabmessungen sowie Aufliegern und Aufbauten unterschiedlicher Höhe, wobei die Windleiteinrichtung aus einem vorwiegend am rückwärtigen Teil des Fahrerhausdaches angeordneten, höhenverstellbaren wirdleit flügel, seitlich an der Fahrerhausrückwand befestigten Windleitblechen und zwischen Windleitflügel und Fahrerhaus sowie zwischen Windleitflügel und Windleitblechen angeordneten, diese verbindenden Zwischenelementen besteht, dadurch gekennzeichnet daß für Fahrerhäuser mit unterschiedlichen Breiten und unterschiedlichen Ubergängen zwischen Fahrerhaus (1) und Auflieger (2) oder Aufbauten ein einziger, aber variierbarer Bausatz, mit Bauteilen gleicher Abmessungen für eine Windleiteinrichtung vorgesenen ist, wobei für die Überbrückung der unterschiedlichen Fugen (14) die seitlichen Windleitbleche (6a, 6b) einstellbar ausgebildet sind, und die zwischen Fahrerhaus (1) und Windleitflügel (5) angeordneten Zwischenelemente (7a, 7b) in der Fahrerhauslängsmittelebene in Abhängigkeit von der Fahrerhausbreite unterschiedliche Fugen (12) aufweisen.

2. Windleiteinrichtung nach Anspruch 1, dadurch gekennzeichnet, daß die einheitlichen Windleitbleche (6a, 6b) für alle Fahrerhausvarianten an der Fahrerhausrückwand (4) im gleichen Abstand zur seitlichen Fahrerhausbegrenzung, einstellbar (17) in ihrer seitlichen Ausladung, angeordnet sind und die freien Enden (9) der Windleitbleche (6a, 6b) auf die äußere seitliche Begrenzung des Aufliegers (2) bei unterschiedlicher Fugenbildung (14) eingestellt sind.

3. Windleiteinrichtung nach Anspruch 1, dadurch gekennzeichnet, daß der sich dachwärts verjüngende Windleitflügel (5) seitlich sich ebenfalls dachwärts verjüngende Rundwülste (10) aufweist, die in Kombination mit den sich an ihn anschließenden Zwischenelementen (7a, 7b, 8a, 8b) seitliche, kegelförmig verlaufende Rillen (11) bilden.

4. Windleiteinrichtung nach den Ansprüchen 1 bis 3, dadurch gekennzeichnet, daß die seitlichen Zwischenelemente (8a, 8b) mit ihren oberen Enden die unteren seitlichen, unterhalb der Rundwülste (10) liegenden eingekragten Seitenwände (13) des Windleitflügels (5) bei unterschiedlicher Fugenbildung verdecken.

## Claims

1. A spoiler device for lorries and towing vehicles, having drivers' cabs of different external dimensions, and trailers and structures of different height, the spoiler device comprising a vertically adjustable air vane arranged mainly on the rearward part of the roof of the driver's cab, baffle plates secured at the side of the rear wall of the driver's cab, and intermediate members arranged between the air vane and the driver's cab and between the air vane and the baffle plates and connecting them, characterized in that for drivers' cabs of different widths and different transitions between the driver's cab (1) and the trailer (2) or structures a single but variable kit with components of similar dimensions is provided for a spoiler device, the lateral baffle plates (6a, 6b) being made adjustable for bridging the different joints (14), and the intermediate members (7a, 7b) arranged between the driver's cab (1) and the air vane (5) have different joints (12) in the longitudinal median plane of the driver's cab in accordance with the width of the driver's cab.

2. A spoiler device according to Claim 1, characterized in that for all variants of drivers' cabs the uniform baffle plates (6a, 6b) are arranged on the rear wall (4) of the driver's cab at the same distance from the lateral boundary of the driver's cab, so as to be adjustable (17) in their lateral projection, and the free ends (9) of the baffle plates (6a, 6b) are adjusted to the external lateral boundary of the trailer (2) with different jointing (14).

3. A spoiler device according to Claim 1, characterized in that the air vane (5) tapering towards the roof is provided laterally with round bulges (10) which likewise taper towards the roof and which in combination with the intermediate members (7a, 7b, 8a, 8b) adjoining them form lateral grooves (11) extending in a tapered manner.

4. A spoiler device according to Claims 1 to 3, characterized in that the lateral intermediate members (8a, 8b) cover with their upper ends the lower lateral projecting side walls (13) of the air vane (5) situated below the round bulges (11) where the jointing differs.

## Revendications

1. Dispositif de guidage de l'air pour camions et semi-remorques avec des cabines pour le conducteur de dimensions différentes ainsi que des caisses et des superstructures de hauteur différente, dans lequel le dispositif de guidage de l'air se compose d'un déflecteur de guidage de l'air réglable en hauteur, placé généralement à l'arrière du toit de la cabine, de tôles de guidage de l'air fixées latéralement à la paroi arrière de la cabine, d'éléments intermédiaires disposés entre le déflecteur de guidage de l'air et la cabine, ainsi qu'entre le déflecteur de guidage de l'air et les tôles de guidage de l'air et reliant ces pièces entre elles, dispositif de guidage de l'air caractérisé en ce qu'il est prévu pour des cabines à largeurs différentes et des passages différents entre cabine (1) et caisse ou carrosserie (2), un jeu unique mais modulable d'éléments de construction de mêmes dimensions destinés au dispositif de guidage de l'air, tandis que pour le recouvrement des jointures différentes (14), les tôles latérales de guidage de l'air (6a, 6b) sont réalisées de façon réglable et les éléments intermédiaires (7a, 7b) placés entre cabine (1) et déflecteur de guidage de l'air (5) comportent des jointures (12) différentes dans le plan moyen longitudinal de la cabine en fonction de la larguer de la cabine.

2. Dispositif de guidage de l'air selon la revendication 1, caractérisé en ce que les tôles de guidage de l'air (6a, 6b) uniformes, pour toutes les variantes de cabine de conducteur, sont montées sur la paroi arrière (4) de la cabine à la même distance par rapport à la délimitation latérale de cette cabine du conducteur en étant réglables (17) dans leur empattement latéral et les extrémités libres (9) des tôles de guidage de l'air (6a, 6b) vers la délimitation latérale extérieure de la caisse (2) sont réglées pour correspondre à différents formations de jointures (4).

3. Dispositif de guidage de l'air selon la revendication 1, caractérisé en ce que le déflecteur de guidage de l'air (5), allant en se rétrécissant du côté du toit est pourvu latéralement, également, du côté du toit, de bourrelets (10) qui en combinaison avec les éléments intermédiaires (7a, 7b, 8a, 8b) se raccordant à ces bourrelets, forment des goulottes latérales (11) s'étendant en forme de cône.

4. Dispositif de guidage de l'air selon les revendications 1 à 3, caractérisé en ce que les éléments intermédiaires latéraux (8a, 8b) recouvrent par leurs extrémités supérieures les parois latérales inférieures (13) formant collets en retrait, du déflecteur de guidage de l'air (5), situées au-dessous des bourrelets ronds (10) et ce pour différentes structures de joints.
